# EUROPÄISCHE PATENTANMELDUNG

(11) **EP 2 317 194 A2**
(43) Veröffentlichungstag der Anmeldung: **04.05.2011**
(21) Anmeldenummer: 10013974.0
(22) Anmeldetag: 26.10.2010
(51) Int. Cl.: F16K 41/10

(54) **Ventil**

(30) Priorität: 03.11.2009 DE 202009014840 U
(71) Anmelder: Stöhr Armaturen GmbH & Co. KG, 86343 Königsbrunn (DE)
(72) Erfinder: Ilgaz, Hakki, 86399 Bobingen (DE)
(74) Vertreter: Schulz, Manfred

(57) **Zusammenfassung**

Ventil für tiefkalte, bevorzugt flüssige Medien, wobei an einem eine ventilkammerumschließenden Ventilgehäuse (16) ein Kaltrohr (4) anschließt, welches das Ventilgehäuse (16) mit einer Antriebsaufnahme (2) verbindet und das Kaltrohr (4) ein Außenrohr (5) umschließt, indem eine Schubstange (6) zumindest axial beweglich vorgesehen ist und ein Druckring (8) die Ventilkammer (11) abdichtend abschließt und einem längsbeweglichen Dichtkörper (15) mit einem dichten Längenkompensator (17) verbunden ist.

Das Ventil zeichnet sich dadurch aus, dass das zwischen Kaltrohr (4) und Außenrohr (5) bestehende Volumen (19) oder das Rohrinnere (24) des Außenrohres (5) evakuierbar oder mit einem Schutzgas befüllbar ist.

## Beschreibung

Die Erfindung betrifft ein Ventil, insbesondere ein Kaltventil für tiefkalte, bevorzugt flüssige Medien.

Bekannte Ventile besitzen ein Ventilgehäuse, in dem die Ventilkammer angeordnet ist. In der Ventilkammer ist auch der Ventilsitz vorgesehen, der durch einen Dichtkörper verschlossen oder freigegeben wird. Für die Ansteuerung des Dichtköpers ist eine Schubstange vorgesehen. Die Schubstange ist in einem Außenrohr geführt und zumindest bezüglich der Rohrachse axial beweglich. Bei den bekannten Ventilen besteht eine Verbindung zwischen der Ventilkammer und dem Zwischenraum zwischen der Schubstange und dem Außenrohr. In der geöffneten Stellung des Ventiles wird somit auch dieser Zwischenraum von dem zu steuernden Medium befüllt.

In der Regel befinden sich an den Rohrleitungen, die die tiefkalten, bevorzugt flüssigen Medien leiten, entsprechende Isolierungen, um den Energieverlust möglichst gering zu halten. Üblicherweise wird daher die Längsachse des Außenrohres rechtwinklig zur Rohrleitung orientiert. Die bekannten Anordnungen limitieren aber auch die Einbausituation der Ventile. Die Schubstange wird von einem Antrieb bewegt, der in einer Antriebsaufnahme, am Ende der Schubstange, außerhalb der Isolierung angeordnet ist. Da der gesamte Zwischenraum zwischen der Schubstange und dem Außenrohr mit der Ventilkammer in Verbindung steht, bildet sich in dem Zwischenraum, aufgrund des Temperaturgradienten in diesem Bereich, ein Phasenwechsel des Mediums aus. Diese Ausbildung der Phasengrenze wird hingenommen, da durch die Gasphase des Mediums eine gewisse Isolation erreicht wird. Dies bedingt aber auch, dass das Ventil stehend über dem Rohrleitungssystem einzubauen ist, beziehungsweise sich die Antriebsaufnahme vertikal über dem Dichtsitz befindet. Der Einsatzbereich der vorgenannten Ventile nach dem Stand der Technik ist daher verhältnismäßig begrenzt.

Im Stand der Technik ist ein Regelventil bekannt mit einem Fluidkanal und einem Ventilsitz; einem Ventilbetätigungsteil; einem Ventilspindeltragelement, dessen oberes Ende an dem Ventilbetätigungsteil befestigt ist und dessen unteres Ende an dem Ventilkörper befestigt ist; einer Ventilspindel, die das Ventilspindeltragelement durchdringt und deren oberes Endteil mit dem Ventilbetätigungsteil verbunden ist und deren unteres Endteil in den Ventilkörper eintritt, wobei die Ventilspindel durch das Ventilbetätigungsteil nach oben oder nach unten bewegt wird; und einem Ventilelement, das an dem unteren Endteil der Ventilspindel befestigt ist.

Ausgehend von diesem Stand der Technik ist es Aufgabe der vorliegenden Erfindung ein Ventil anzugeben, das flexibler einsetzbar ist.

Gelöst wird die erfindungsgemäße Aufgabe durch ein Ventil, insbesondere ein Kaltventil, für tiefkalte, bevorzugt flüssige Medien, wobei an einem, eine Ventilkammer umschließenden Ventilgehäuse ein Kaltrohr anschließt, welches das Ventilgehäuse mit einer Antriebsaufnahme verbindet und das Kaltrohr ein Außenrohr umschließt, und in dem Außenrohr eine Schubstange zumindest axial beweglich ist und ein Druckring die Ventilkammer abdichtend abschließt und ein mit dem Ventilsitz der Ventilkammer zusammenwirkender, längsbeweglicher Dichtkörper mit einem dichten Längenkompensator verbunden ist, das sich dadurch auszeichnet, dass das zwischen Kaltrohr und Außenrohr bestehende Volumen oder das Rohrinnere des Außenrohres evakuierbar oder mit einem Schutzgas befüllbar ist.

Durch den erfindungsgemäßen Vorschlag wird der Zwischenraum zwischen der Schubstange und dem Außenrohr dicht von der Ventilkammer abgegrenzt. Damit kann kein Medium mehr an die Außenseite in den Bereich der Antriebsaufnahme gelangen. Geschickterweise wird dabei ein Längenkompensator eingesetzt, da natürlich die Bewegung des Dichtkörpers durchzuführen ist und trotzdem eine dichte Abgrenzung der verschiedenen Teilvolumina notwendig ist. Zusätzlich wird die Ventilkammer in axialer Richtung (bezogen auf die Achse des Außenrohrs) von einem Druckring abgeschlossen. Insbesondere dient der Druckring dazu, das Volumen zwischen dem Kaltrohr und dem innenliegenden Außenrohr gegenüber der Ventilkammer abzudichten. Mit der Erfindung wird erreicht, dass die Isolation im Bereich des erfindungsgemäßen Ventils erheblich verbessert ist. Das flüssige und tiefkalte Medium verbleibt im Ventilgehäuse und gelangt nicht in den Bereich der Antriebsaufnahme, wodurch eine beliebige Einbaulage des erfindungsgemäßen Ventils möglich ist. Geschickterweise ist nach der Erfindung vorgesehen, dass das zwischen Kaltrohr und Außenrohr bestehende Volumen evakuierbar ist. Durch eine solche Anordnung wird die Wärmedämmung zusätzlich verbessert. Gleiches wird auch dadurch erreicht, dass das Rohrinnere des Außenrohres in einer erfindungsgemäßen Variante evakuiert wird.

Es ist auch bekannt, das Rohrinnere des Außenrohres einerseits und/oder das Volumen zwischen dem Kaltrohr und dem Außenrohr andererseits mit einem Schutzgas, zum Beispiel Helium oder einem anderen bei ausreichend tiefen Temperaturen sich verflüssigenden Gas zu befüllen, um so auch bei Tieftemperaturanwendungen eine ausreichende Betriebssicherheit zu gewähren. Das eingefüllte Schutzgas verdrängt dabei herkömmliche Luft oder Stickstoff, die sich bei tiefen Temperaturen verflüssigen und dann zum Beispiel eine starre, feste Verbindung zwischen ansonsten beweglichen Elementen ergeben.

In einer bevorzugten Variante der Erfindung ist vorgesehen, dass das Außenrohr und der Druckring zusammen mit Dichtkörper und Längenkompensator eine, in das Kaltrohr einschiebbare oder ausbaubare Baugruppe bilden. Das Kaltrohr verbleibt am Ventil und muss im Wartungsfall nicht entfernt werden. Damit wird das für die Isolierung eingesetzte Vakuum nicht beeinträchtigt, und die gesamte Baugruppe kann für Revisions- oder Wartungszwecke ausgebaut werden.

Die Erfindung erlaubt es daher, sowohl horizontale Einbausituationen (bezogen auf die Lage von Antriebsaufnahme und Ventilsitz) wie auch Über-Kopf-Einbauten zu realisieren, wodurch der Anwendungsbereich des erfindungsgemäßen Ventils erheblich erweitert wird.

In einer besonders bevorzugten Ausgestaltung der Erfindung wird vorgesehen, dass sich der Druckring an dem der Ventilkammer zugewandten Ende des Außenrohres anschließt und der Druckring über den dichten Längenkompensator mit dem Dichtkörper verbunden ist.

In der eingangs geschilderten Variante wird durch den Einsatz des Dichtringes erreicht, dass die Ventilkammer von dem Inneren des Kaltrohres beziehungsweise dem Inneren des Außenrohres abgetrennt ist. Natürlich sind die einzelnen Aufgaben auch durch jeweils getrennte Druckringe realisierbar, in einer erfindungsgemäßen Variante ist es aber auch vorgesehen, dass der Druckring beide Aufgaben in sich integriert. Darüber hinaus ist es geschickt, wenn der (bewegliche) Dichtkörper, der über dem Längenkompensator gehalten ist, ebenfalls am Druckring angeschlossen ist. Somit schließt der Längenkompensator in der erfindungsgemäßen Variante einerseits am Dichtkörper und andererseits am Druckring an. Hieraus resultiert eine kompakte Bauweise; die von dem Medium durchströmte Ventilkammer ist gegenüber dem übrigen Ventilbereich, insbesondere dem Bereich des Ventils, welches die Antriebselemente aufnimmt, einerseits durch den Druckring und andererseits durch den Längenkompensator dicht, insbesondere gasdicht abgegrenzt beziehungsweise todraumoptimiert. Erfindungsgemäß ist vorgesehen, dass der Dichtkörper über den Längenkompensator mit dem Druckring verbindbar ist. Diese Verbindung wird zum Beispiel durch eine Verschweißung, eine Verlötung oder ein verkleben realisiert, unter Umständen ist sogar eine Verschraubung, soweit sie ausreichend druckdicht ausgeführt ist, einsetzbar und denkbar und von der Erfindung umfasst.

Die Ventilkammer ist somit auf den Bereich der nächsten Nähe beziehungsweise unmittelbaren Nähe zum Ventilsitz beschränkt, das Risiko des Einschlusses von Fremdgas im Ventil ist erheblich reduziert.

Geschickterweise wird in einer erfindungsgemäßen Variante eine dichte, insbesondere druckdichte Verbindung des Kaltrohres mit dem Ventilgehäuse vorgeschlagen. Das Kaltrohr hat somit die Aufgabe, das Ventilgehäuse zu halten, wobei die Ausgestaltung durchaus auch mehrteilig sein kann, das heißt, Ventilgehäuse und Kaltrohr sind zum Beispiel durch entsprechende Verbindungsmittel miteinander dicht verbunden. Durch die dichte Verbindung ist sichergestellt, dass kein Gasaustausch aus dem Inneren des Kaltrohres beziehungsweise der Ventilkammer, gerade im Übergangsbereich, nach außen gelangen kann.

Neben einer mehrteiligen Ausgestaltung ist es erfindungsgemäß in einer Variante auch vorgesehen, eine einstückige Ausgestaltung des Kaltrohres mit dem Ventilgehäuse zu realisieren. Da die Bearbeitungsschritte für die beiden einzelnen Elemente unter Umständen unterschiedlich sind, bietet es sich an, die Herstellung zunächst getrennt voneinander durchzuführen und am Ende diese beiden Teile zu einer gemeinsame Baugruppe zu verbinden, zum Beispiel zu verschweißen, zu verlöten oder zu verkleben, woraus eine ebenfalls einstückige, insbesondere nur durch Zerstörung trennbare Bauform resultiert.

Die Schubstange wirkt direkt oder indirekt auf den Dichtkörper. Um die Schubstange in axialer Richtung zu bewegen ist ein Antrieb vorgesehen, der geschickterweise in der Antriebsaufnahme angeordnet ist. Die Antriebsaufnahme befindet sich dabei auf der Außenseite der, das Rohrleitungssystem umgebenden Isolierung. Erfindungsgemäß wird dabei zum Beispiel ein händischer oder auch pneumatischer, elektromechanischer, hydraulischer oder spindelartiger Antrieb vorgeschlagen. Bei einem spindelartigen Antrieb, welcher sowohl bei einem händisch betätigbaren wie auch bei einem automatisch betätigten Ventil realisierbar ist, wird dabei eine Rotationsbewegung der Spindel in einem entsprechenden Vorschub der Spindel umgesetzt, der zu einer entsprechenden axialen Versetzung der Schubstange führt. Dabei ist der Begriff "Schubstange" nicht beschränkt auf nur eine eindimensionale Bewegung reduziert zu verstehen, die Schubstange kann selbst natürlich um ihre Längsachse spindelartig rotieren, wie das zum Beispiel in einer erfindungsgemäßen Variante ebenfalls vorgesehen ist. In der Regel wird aber für die Schließfunktion des Dichtkörpers nur die axiale Bewegung der Schubstange benötigt.

Die Bauteilgrenze des Ventiles wird insbesondere durch das Kaltrohr definiert, welche eine mechanische Verbindung herstellt zwischen dem Ventilgehäuse einerseits und der Antriebsaufnahme andererseits. Es ist daher auch hier günstig, eine dichte, insbesondere druckdichte Verbindung des Kaltrohres mit der Antriebsaufnahme vorzusehen. Die dichte, insbesondere druckdichte Verbindung kann dabei auch bei einer mehrteiligen Ausgestaltung realisiert sein, die Erfindung umfasst aber auch eine einstückige Ausgestaltung des Kaltrohres mit der Antriebsaufnahme. Auch hier ist es möglich, eine getrennte Herstellung von Kaltrohr und Antriebsaufnahme vorzusehen, um die beiden Elemente für ihre jeweiligen Aufgaben optimal zu bearbeiten und dann die beiden Bauelemente zu einer gemeinsamen Baugruppe zu verbinden, zum Beispiel zu verschweißen oder zu verkleben.

Das erfindungsgemäße Ventil wird als Kaltventil bezeichnet, diese finden insbesondere im hochwärmegedämmten Leitungsbau Verwendung. Ein sehr gutes Isoliermittel ist hierbei ein Vakuum, weswegen es im Stand der Technik üblich ist, um das Rohrleitungssystem herum einen Vakuumbereich zu realisieren. Gemäß der Erfindung ist auch vorgesehen, dass das Kaltrohr als außenliegendes Rohr eine Grenze des Vakuumbereiches definiert und die das Volumen definierende Umhausung in geeigneter Weise mit dem Ventil verbunden wird. Hierzu wird erfindungsgemäß ein Einschweißflansch vorgeschlagen, der günstigerweise möglichst weit vom Ventilgehäuse abgelegen am Ventil vorgesehen ist, sich also bevorzugt zum Beispiel im Bereich der Antriebsaufnahme befindet oder aber von einem Bereich des Kaltrohres, der insbesondere der Antriebsaufnahme zugewandt ist.

Geschickterweise ist an dem, dem Druckring zugewandten Ende des Außenrohres an diesem ein Abstützflansch vorgesehen. Somit drückt das Außenrohr nicht nur mit seiner verhältnismäßig geringen Wandstärke auf den Druckring, sondern über den breiteren, ringartigen Abstützflansch.

Der Druckring ist dabei zum Beispiel aus Metall gefertigt, er kann aber auch aus entsprechend tieftemperaturfesten, zur Abdichtung geeigneten Polymeren oder ähnlichen Materialien bestehen. Es ist auch möglich, den Druckring aus einer Materialkombination herzustellen, also zum Beispiel in einen Metallgrundkörper ein entsprechendes Polymer einzulegen und einzuarbeiten.

Der Aufbau des erfindungsgemäßen Ventiles ist bevorzugt modulartig, derart, dass die einzelnen Baugruppen austauschbar sind, was die Wartung erleichtert. Es bietet sich daher auch an, in einem entsprechenden Baukastenprinzip mehrere Typen eines Modules für verschiedene Anwendungsfälle oder Dimensionierungen zur Verfügung zu stellen und so mit einer verhältnismäßig geringen Anzahl unterschiedlicher Baugruppen eine große Typenvielzahl des erfindungsgemäßen Ventiles zu realisieren. So ist es zum Beispiel vorgesehen, dass die Schubstange direkt oder indirekt, insbesondere über ein Kupplung auf den Dichtkörper wirkt, und so die Lage der Schubstange die Lage des Dichtkörpers bezüglich des Ventilsitzes bestimmt. Durch entsprechende Verlängerung der Schubstange ist die Einbaulage entsprechend beherrschbar und in einer Kupplung wird die longitudinale Bewegung der Schubstange in geeigneter Weise auf den Dichtkörper umgesetzt.

Wie bereits ausgeführt, bildet der Längenkompensator eine Grenzfläche zwischen der Ventilkammer einerseits und dem übrigen Ventilbereich. Insbesondere umschließt der Längenkompensator dabei dicht, bevorzugt schlauchartig, einen Innenraum, in dem Steuerelemente für den Dichtkörper anordenbar sind. So ist zum Beispiel in einer ersten Variante in dem Innenraum ein Stößel vorgesehen, der einerseits am Dichtkörper anliegt und andererseits mit der Schubstange zusammenwirkt. Der Stößel ist dabei als separates Bauteil ausgeführt und zum Beispiel durch eine entsprechende Verschraubung oder einer sonstigen Befestigung mit dem Dichtkörper verbunden, der Stößel ist aber auch lose einlegbar und aufgrund der Einbausituation exakt gehalten.

In einer bevorzugten Ausgestaltung der Erfindung ist der Längenkompensator als dünnwandiger Faltenbalg oder Membranbalg ausgebildet. Es ist zu beachten, dass der Längenkompensator eine Kompensationsaufgabe im Hinblick auf die unterschiedliche relative Lage des Dichtkörpers zum Ventilsitz hat. Dabei ist unabhängig von der jeweiligen Position des Dichtkörpers Dichtheit gefordert, was durch den Längenkompensator realisiert wird. Vorteilhafterweise ist dabei der Längenkompensator zum Beispiel als dünnwandiger Faltenbalg mit gerundeten Wellen realisiert. Anstelle der mit gerundeten Wellen ausgestalteten Faltenbälge, die auch als Wellbalg bezeichnet werden, sind noch Faltenbälge mit spitzen Falten vorgesehen, die als Membranbälge bekannt sind. Sie entstehen dabei nicht aus einer Umbörtelung, die zu einer Rundung an den Wellenkämmen führt, sondern durch eine Verklebung oder Verschweißung der Randbereiche. Die erfindungsgemäß vorgeschlagenen Falten- oder Membranbälge sind flexibel und damit leicht beweglich. Sie sind gut geeignet um einerseits Bewegung und andererseits Abdichtung miteinander zu vereinen.

Als Material für die Bildung der Längenkompensatoren, insbesondere den Faltenbalg oder den Membranbalg, wird Metall (zum Beispiel dünnwandiger Stahl, Edelstahl, Sonderstähle, tieftemeraturstabile Sonderstähle, Federstahl oder ähnliches) vorgeschlagen, das entsprechend dünnwanding ausgebildet ist, um die Flexibilität zu erreichen. Daneben ist es auch möglich, ein Polymer, insbesondere ein tieftemperaturflexibles und stabiles Polymer alternativ einzusetzen.

Bevorzugterweise ist der Dichtkörper aus Metall (zum Beispiel Stahl, Messing) oder auch einem Polymer, insbesondere Polytetrafluorethylen (PTFE) oder Polychlortrifluorethylen (PCTFE), gebildet. Natürlich ist die Ausgestaltung des Dichtkörpers im Zusammenwirken mit dem Ventilsitz so gewählt, dass ein dichter Verschluß des Ventilsitzes erfolgt. Mit dem Einsatz von Polymeren ist eine entsprechende Gewichtsreduktion verbunden, auf der anderen Seite zeichnen sich die vorgeschlagenen Polymere auch durch entsprechend geringe Adhäsionswirkung, Abdichteigenschaften oder Reaktionsträgheit mit dem Medium aus.

Der Dichtkörper kann in einer erfindungsgemäßen Variante aber auch eine mit dem Ventilsitz zusammenwirkende, insbesondere elastische Dichtfläche aufweisen.

Das erfindungsgemäße Ventil wird insbesondere in einem Temperaturbereich von kleiner als -100° C eingesetzt. Besonders bevorzugt ist eine Anwendung des Ventils in Bereichen kleiner als 150 K. Der Anwendungsbereich des erfindungsgemäßen Ventils erstreckt sich dabei herab bis auf 1 K oder 1,5 K und umfasst damit auch die flüssige Phase von Helium. Das Ventil ist insgesamt zum Beispiel aus Metall, Werkzeugstählen oder ähnlichem, gefertigt. Das Ventil ist zum Beispiel als Trennventil, als Regelventil, als Eck- oder Durchgangsventil realisierbar. Das Ventil ist zum Beispiel automatisch oder händisch betätigbar ausgebildet.

In der Zeichnung ist die Erfindung insbesondere in einem Ausführungsbeispiel schematisch dargestellt. Es zeigen:
- Fig. 1: im Schnitt den vom Rohrleitungssytem abgewandten Bereich des erfindungsgemäßen Ventiles;
- Fig. 2: den am Rohrleitungssystem vorgesehenen Bereich des erfindungsgemäßen Ventiles;
- Fig. 3: ein Detail des erfindungsgemäßen Ventils.

In den Figuren sind gleiche oder einander entsprechende Elemente jeweils mit den gleichen Bezugszeichen bezeichnet und werden daher, sofern nicht zweckmäßig, nicht erneut beschrieben.

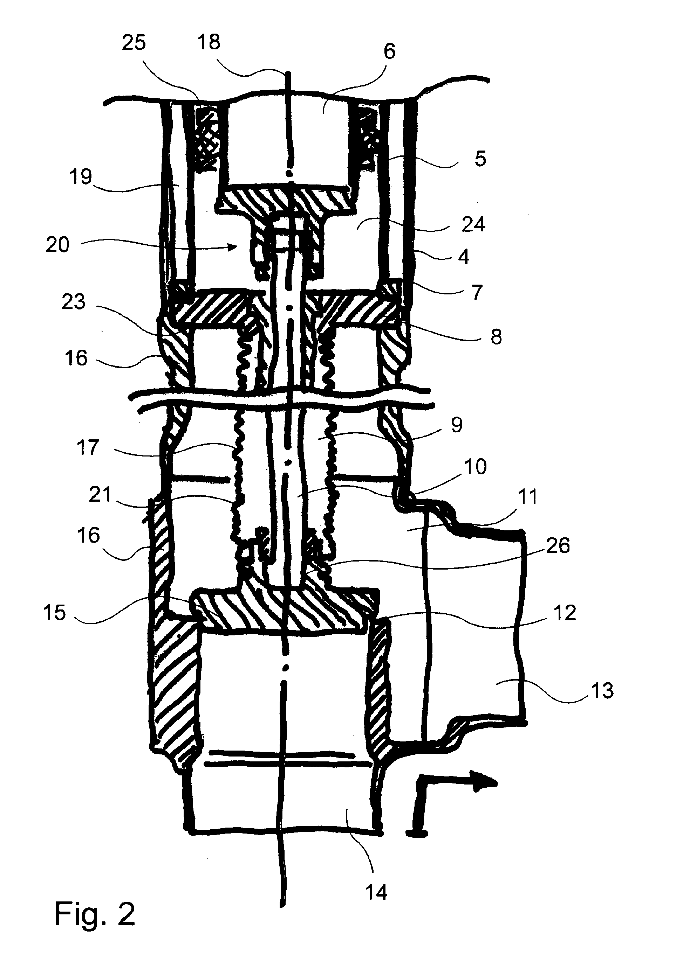

Um die Übersichtlichkeit zu erhöhen wurden das erfindungsgemäße Ventil in zwei Zeichnungen dargestellt, wobei sich die erfindungsgemäße Ausgestaltung insbesondere aus Fig. 2 ergibt.

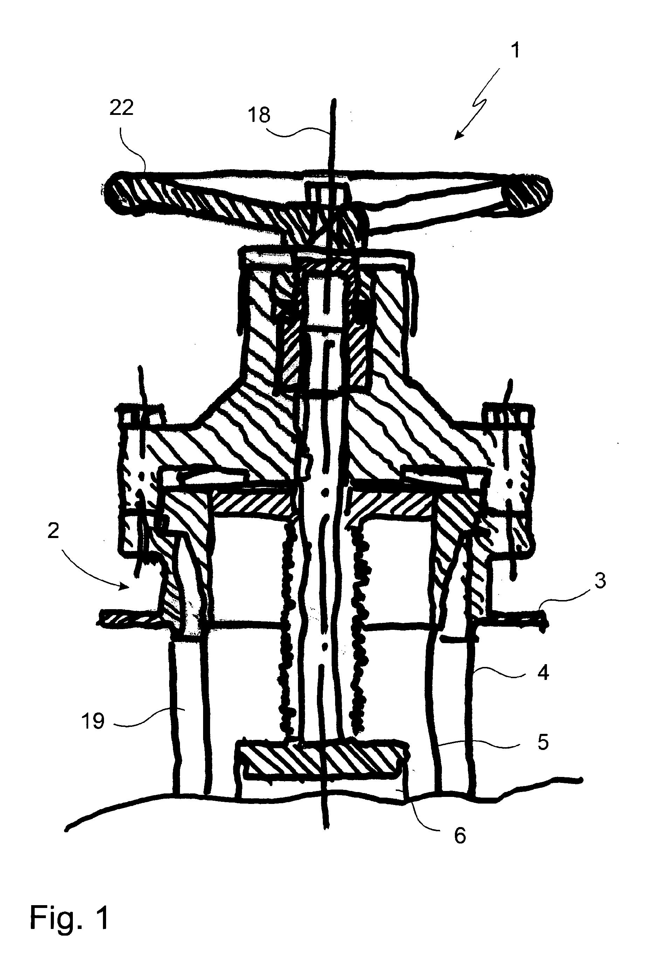

Das erfindungsgemäße Ventil, insbesondere ein Kaltventil für tiefkalte, bevorzugt flüssige Medien, besteht dabei aus einem Ventilgehäuse 16, an welchem ein Kaltrohr 4 insbesondere einstückig und druckdicht anschließt. Dabei verbindet das Kaltrohr 4 das Ventilgehäuse 16 mit der Antriebsaufnahme 2 (siehe Fig. 1). Der Aufbau des Ventils erstreckt sich dabei längs der Rohrachse 18. Das Kaltrohr 4 umgibt ein Außenrohr 5. Der Zwischenraum zwischen Kaltrohr 4 und Außenrohr 5 ist als Volumen 19 beschrieben. Bevorzugterweise sind Kaltrohr 4 und Außenrohr 5 koaxial zu der Rohrachse 18, ohne die Erfindung hierauf beschränken zu wollen.

In dem Außenrohr 5 ist eine Schubstange 6 zumindest axial beweglich vorgesehen. Der Antrieb 1 ist an der Antriebsaufnahme 2 vorgesehen, hier zum Beispiel als Spindelantrieb realisiert, hierfür ist zum Beispiel ein Drehrad 22 vorgesehen, das um die Rohrachse 18 drehbar ist. In der Konsequenz erzeugt der Antrieb 1 eine axiale Bewegung (in Richtung der Rohrachse 18). Hierdurch wird die Schubstange axial (bezogen auf die Rohrachse 18) vor oder zurück bewegt.

An dem der Ventilkammer 11 zugewandten Ende des Außenrohres 5 schließt sich ein Druckring 8 an, welcher die Ventilkammer 11 abdichtend abschließt. In dem hier gezeigten Ausführungsbeispiel befindet sich der Druckring 8 insbesondere zwischen dem Volumen 19 und der Ventilkammer 11. In der Ventilkammer 11 ist der Ventilsitz 12 vorgesehen; die Ventilkammer 11 umfaßt noch den Zulauf 14 und den Ablauf 13, die die jeweiligen Verbindungen zu dem Rohrleitungssystem bilden. In einer bevorzugten Ausgestaltung der Erfindung ist vorgesehen, dass das erfindungsgemäße Ventil auch in beide Richtungen durchströmbar ist. Das bedeutet, dass die Funktion von Zulauf 14 und Ablauf 13 gegebenenfalls miteinander vertauscht sind. Es kommt für die ordnungsgemäße Funktionsweise des erfindungsgemäßen Ventils nicht darauf an, dass der anliegende Druck des Mediums im Zulauf 14 das Dichtelement vom Ventilsitz abzuheben versucht, erfindungsgemäß ist auch vorgesehen, dass der Mediendruck auf dem Dichtkörper 15 lastet und diesen zusätzlich auf den Ventilsitz 12 drückt.

Der Druckring 8 ist dabei im Übergangsbereich des Außenrohres 5 in das Ventilgehäuse 16 positioniert. Hierzu ist am oberen Ende des Ventilgehäuses 16, welches dem Außenrohr 5 zugewandt ist, eine Schulter 23 ringartig vorgesehen, es entsteht ein dichter Abschluß, der erfindungsgemäß gewünscht ist, da somit nicht nur eine Abgrenzung der Ventilkammer 11 gegenüber dem Volumen 19 erfolgt, sondern auch eine Abgrenzung der Ventilkammer 11 gegenüber dem Rohrinneren 24 innerhalb des Außenrohres 5.

Dabei ist natürlich auch zu beachten, dass das Ventilgehäuse 16 erfindungsgemäß auch ein Stück des Kaltrohrs umfassen kann, was insofern äquivalent zu dem Erfindungsgedanken ist. Das Ventilgehäuse wird durch die Lage des Druckrings 8 definiert. Je näher der Druckring 8 zum Ventilsitz 12 positioniert ist, umso besser ist die Wärmedämmung.

Im Fall des geöffneten Ventiles, der in Fig. 2 nicht gezeigt ist, gelangt das (flüssige und tiefkalte) Medium nur bis zu dem Druckring 8, der relativ nah an dem Rohrleitungssystem ist und sich somit tief in der Isolierung, die das Rohrleitungssystem umgibt befindet.

Dabei wird der Druckring 8 von dem Außenrohr 5 axial nach unten gedrückt, wobei an dem Außenrohr 5 an dem unteren, der Ventilkammer 11 zugewandten Ende ein Abstützflansch 7 vorgesehen ist, um eine großflächige Krafteinleitung zu erreichen.

Im Übrigen sind die Wandstärken des Kaltrohres 4 und des Außenrohres 5 möglichst gering gehalten, um Wärmeleitungseffekte möglichst zu reduzieren. Ähnliches gilt auch für die Wandstärke der Schubstange 6, da diese Elemente die das Rohrleitungssystem umgebende Isolierung durchdringen und eine potentielle Wärmebrücke darstellen.

Geschickterweise ist ein Führungselement 25 für die Schubstange 6 auf der Innenseite des Außenrohres 5 vorgesehen.

In Fig. 2 im unteren Bereich ist der Ventilsitz 12 vorgesehen. Das hier gezeigte Ventil ist als Eckventil realisiert, ohne allerdings die Erfindung hierauf beschränken zu wollen. Der erfindungsgemäße Vorschlag kann in gleicher Weise auch an einem Durchgangsventil realisiert werden. Der Ventilsitz 12 wird verschlossen von dem Dichtkörper 15. Dabei wirkt die Schubstange 6 über den Betätigungsstößel 10 auf den Dichtkörper 15. Im unteren Bereich der Schubstange 6 ist dabei eine Kupplung 20 vorgesehen, die eine lösbare Verbindung zwischen der Schubstange 6 und dem Betätigungsstößel 10 bildet.

An dem Dichtkörper 15 ist auf der dem Ventilsitz 12 abgewandten Seite ein Verbindungsschuh 26 vorgesehen, der hülsenartig ausgebildet ist und in welchen der untere Bereich des Betätigungsstößels 10 kraft- und/oder formschlüssig, gegebenenfalls von einem Befestigungsmittel (Gewinde, Schraube usw.) gehalten, eingreift. Durch die starre Verbindung des Dichtkörpers 15 über dem Betätigungsstößel 10 mit der Schubstange 6 erfolgt der Dichtkörper automatisch und unabhängig von am Dichtkörper 15 anliegenden Mediendruck der Stellung der Schubstange 6. Dabei durchdringt der Betätigungsstößel 10 den Innenraum 9, der gegenüber der Ventilkammer 11 durch den hülsen- oder schlauchartigen Längenkompensator 17 dicht, insbesondere gasbeziehungsweise mediumdicht, abgegrenzt ist. In einer bevorzugten Ausgestaltung der Erfindung ist dabei der Längenkompensator 17 als metallischer, dünnwandiger Faltenbalg oder Membranbalg realisiert. Dabei nützt die Erfindung die Funktion des Faltenbalges optimal aus, da insbesondere bei tiefkalten Temperaturen mit Hilfe des erfindungsgemäßen Längenkompensators, unabhängig von der Stellung des Dichtkörpers 15 zum Ventilsitz 12, eine zuverlässige Abdichtung des Innenraumes 9 zur Ventilkammer 11 besteht.

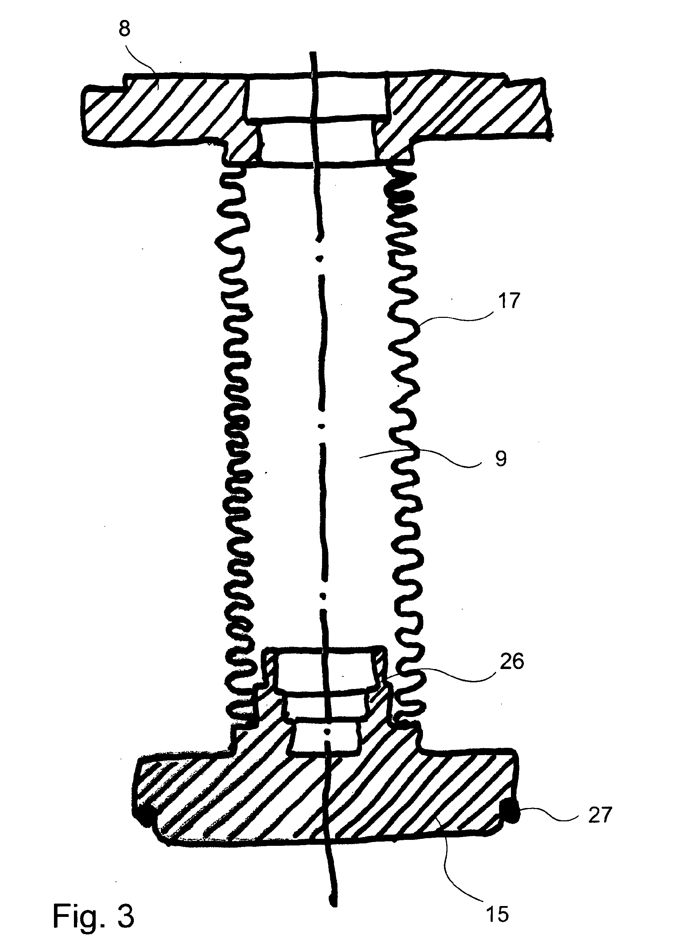

Fig. 3 zeigt in einem vergrößerten Detail die Teilbaugruppe des Dichtelementes, bestehend aus dem Dichtkörper 15, dem Längenkompensator 17, welcher den Innenraum 9 umgibt, und dem oben angeschlossenen Druckring 8. In dem hier gezeigten Ausführungsbeispiel schließt der Längenkompensator 17 zuverlässig dicht sowohl an Dichtkörper 15 wie auch an dem Druckring 8 an, wobei der Druckring 8 im Ventil durch den Abstützflansch 7 des Außenrohres axial festgelegt ist, der Dichtkörper 15 aber über den Längenkompensator 17 in seiner axialen Lage einstellbar und flexibel ist. Dem Ventilsitz 12 zugewandt, befindet sich am unteren Rand des Dichtkörpers 15 eine elastische Dichtfläche oder Dichtung 27 (zum Beispiel eine O-Ring-Dichtung), die mit dem Ventilsitz 12 dichtend zusammenwirkt.

Die jetzt mit der Anmeldung und später eingereichten Ansprüche sind Versuche zur Formulierung ohne Präjudiz für die Erzielung weitergehenden Schutzes.

Sollte sich hier bei näherer Prüfung, insbesondere auch des einschlägigen Standes der Technik, ergeben, daß das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist.

Es ist weiter zu beachten, daß die in den verschiedenen Ausführungsformen beschriebenen und in den Figuren gezeigten Ausgestaltungen und Varianten der Erfindung beliebig untereinander kombinierbar sind. Dabei sind einzelne oder mehrere Merkmale beliebig gegeneinander austauschbar. Diese Merkmalskombinationen sind ebenso mit offenbart.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die bislang nur in der Beschreibung offenbart wurden, können im Laufe des Verfahrens als von erfindungswesentlicher Bedeutung, zum Beispiel zur Abgrenzung vom Stand der Technik beansprucht werden.

Merkmale, die nur in der Beschreibung offenbart wurden, oder auch Einzelmerkmale aus Ansprüchen, die eine Mehrzahl von Merkmalen umfassen, können jederzeit zur Abgrenzung vom Stande der Technik in den ersten Anspruch übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

## Patentansprüche

1. Ventil, insbesondere Kaltventil, für tiefkalte, bevorzugt flüssige Medien, wobei an einem eine Ventilkammer (11) umschließenden Ventilgehäuse (16) ein Kaltrohr (4) anschließt, welches das Ventilgehäuse (16) mit einer Antriebsaufnahme (2) verbindet und das Kaltrohr (4) ein Außenrohr (5) umschließt, und in dem Außenrohr (5) eine Schubstange (6) zumindest axial beweglich vorgesehen ist und ein Druckring (8) die Ventilkammer (11) abdichtend abschließt und ein, mit dem Ventilsitz (12) der Ventilkammer (11) zusammenwirkender, längsbeweglicher Dichtkörper (15) mit einem dichten Längenkompensator (17) verbunden ist, **dadurch gekennzeichnet, dass** das zwischen Kaltrohr (4) und Außenrohr (5) bestehende Volumen (19) oder das Rohrinnere (24) des Außenrohres (5) evakuierbar oder mit einem Schutzgas befüllbar ist.

2. Ventil nach Anspruch 1, **dadurch gekennzeichnet, dass** sich der Druckring (8) an dem, der Ventilkammer (11) zugewandten Ende des Außenrohres (5) an diesem anschließt und der Druckring (8) über den dichten Längenkompensator (17) mit dem Dichtkörper (15) verbunden ist.

3. Ventil nach einem der vorhergehenden Ansprüche, **gekennzeichnet durch** eine dichte, insbesondere druckdichte Verbindung des Kaltrohres (4) mit dem Ventilgehäuse (16) und/oder eine einstückige Ausgestaltung des Kaltrohres (4) mit dem ventilgehäuse (16).

4. Ventil nach einem der vorhergehenden Ansprüche, **dadurch gekennzeichnet, dass** die Antriebsaufnahme (2) einen Antrieb (1) für die Schubstange (6) aufnimmt und/oder an der Antriebsaufnahme (2) beziehungsweise dem, der Antriebsaufnahme (2) zugewandten Bereich des Kaltrohres (4) ein Einschweißflansch (3) angeordnet ist.

5. Ventil nach einem der vorhergehenden Ansprüche, **gekennzeichnet durch** einen händischen, pneumatischen, elektromechanischen, hydraulischen und/oder spindelartigen Antrieb (1) und/oder eine dichte, insbesondere druckdichte Verbindung des Kaltrohres (4) mit der Antriebsaufnahme (2).

6. Ventil nach einem der vorhergehenden Ansprüche, **gekennzeichnet durch** eine einstückige Ausgestaltung des Kaltrohres (4) mit der Antriebsaufnahme (2).

7. Ventil nach einem der vorhergehenden Ansprüche, **dadurch gekennzeichnet, dass** das Außenrohr (5) und der Druckring (8) zusammen mit Dichtkörper (15) und Längenkompensator (17) eine in das Kaltrohr (4) einschiebbare oder ausbaubare Baugruppe bilden und/oder an dem, dem Druckring (8) zugewandten Ende des Außenrohres (5) an diesem ein Abstützflansch (7) vorgesehen ist und/oder der Längenkompensator (17) einen Innenraum (9), insbesondere schlauchartig, dicht umgibt.

8. Ventil nach einem der vorhergehenden Ansprüche, **dadurch gekennzeichnet, dass** die Schubstange (6) direkt oder indirekt, insbesondere über ein Kupplung (20) auf den Dichtkörper (15) wirkt und so die Lage der Schubstange (6) die Lage des Dichtkörpers (15) bezüglich des Ventilsitzes (12) bestimmt und/oder in dem Innenraum (9) ein Stößel (10) vorgesehen ist, der einerseits am Dichtkörper (15) anliegt und andererseits mit der Schubstange (6) zusammenwirkt.

9. Ventil nach einem der vorhergehenden Ansprüche, **gekennzeichnet durch** einen, am Dichtkörper (15) einstückig anschließenden, im Innenraum (9) angeordneten Stößel (10), der mit der Schubstange (6) zusammenwirkt.

10. Ventil nach einem der vorhergehenden Ansprüche, **dadurch gekennzeichnet, dass** der Längenkompensator (17) als dünnwandiger Faltenbalg (21) oder Membranbalg ausgebildet ist und/oder der Längenkompensator (17) aus Metall oder einem Polymer, insbesondere einem tieftemperaturflexiblen und stabilen Polymer besteht.

11. Ventil nach einem der vorhergehenden Ansprüche, **dadurch gekennzeichnet, dass** der Dichtkörper (15) aus Metall oder einem Polymer, insbesondere Polychlortrifluorethylen (PCTFE) oder Polytetrafluorethylen (PTFE), besteht und/- oder der Dichtkörper (15) eine, mit dem Ventilsitz (12) zusammenwirkende, insbesondere elastische Dichtfläche (27) aufweist.

12. Ventil nach einem vorhergehenden Ansprüche, **gekennzeichnet durch** eine Führung und/oder Zentrierung der Schubstange (6) in dem Außenrohr (5).

13. Ventil nach einem der vorhergehenden Ansprüche, **dadurch gekennzeichnet, dass** sich in Strömungsrichtung des Mediums in dem Ventilgehäuse (16) nach dem Zulauf (14) der Ventilsitz (12) anschließt.

14. Ventil nach einem der vorhergehenden Ansprüche, **dadurch gekennzeichnet, dass** sich in Strömungsrichtung des Mediums in dem Ventilgehäuse (16) nach dem Ventilsitz (12) ein Ablauf (13) anschließt.

15. Ventil nach einem der vorhergehenden Ansprüche, **dadurch gekennzeichnet, dass das** Ventil als Trennventil oder Regelventil, als Eck- oder Durchgangsventil und/oder als automatisch oder händisch betätigbares Ventil ausgebildet ist.
